# EUROPÄISCHE PATENTSCHRIFT

(11) **EP 3 257 705 B1**
(45) Veröffentlichungstag und Bekanntmachung des Hinweises auf die Patenterteilung: **16.09.2020**
(21) Anmeldenummer: 16175099.7
(22) Anmeldetag: 17.06.2016
(51) Int. Cl.: B60P 7/08

(54) **DECKEN-, WAND- ODER BODENELEMENT UND VERWENDUNG EINES SOLCHEN ELEMENTS**
CEILING, WALL OR FLOOR ELEMENT AND USE OF SUCH AN ELEMENT
ÉLEMENT DE SOL, DE TOIT OU DE PAROI ET SON UTILISATION

(43) Veröffentlichungstag der Anmeldung: 20.12.2017
(73) Patentinhaber: Schmitz Cargobull AG, 48341 Altenberge (DE)
(72) Erfinder: Dahlhaus, Andreas, 48712 Gescher (DE); Warnsing, Daniel, 48727 Billerbeck (DE); Kuhn, Marco, 48691 Vreden (DE)
(74) Vertreter: Cohausz & Florack

(56) Entgegenhaltungen:
- EP-A1- 2 116 456
- US-A- 4 295 765
- US-A- 5 273 382

## Beschreibung

Die Erfindung betrifft ein Decken-, Wand- oder Bodenelement mit einer aus einem Metallwerkstoff bestehenden Decklage, die eine Außenseite und eine gegenüberliegend zur Außenseite angeordnete Rückseite besitzt, und mit einer an die Rückseite der Decklage angeschäumten Isolierlage, wobei die Decklage mindestens eine Durchgangsöffnung besitzt und an der Rückseite der Decklage ein Verstärkungselement angeordnet ist, das eine typischerweise konzentrisch zu der Decklage ausgerichtete Ausnehmung aufweist, wobei das Verstärkungselement als Gegenlager für ein Koppelelement vorgesehen ist, das durch die Durchgangsöffnung in die Ausnehmung einführbar ist, um ein Bauteil oder ein Transportgut an das Decken-, Wand- oder Bodenelement anzukoppeln.

Ebenso betrifft die Erfindung eine vorteilhafte Verwendung eines solchen Elements.

Ein Decken-, Wand- oder Bodenelement der voranstehend angegebenen Art ist beispielsweise aus der EP 2 116 456 A1 bekannt, die den nächstliegenden Stand der Technik darstellt und den Oberbegriff des 1. Anspruchs offenbart.

Elemente der hier in Rede stehenden Art werden zumeist als großflächig sich erstreckende Paneelen beispielsweise zum Bau von Kofferaufbauten von Nutzfahrzeugen für den Transport von temperaturempfindlicher Ware benötigt, die an der Decke des Kofferaufbaus hängend befördert wird oder an der Decke, der jeweiligen Wand oder dem Boden des Aufbaus verspannt werden soll.

Damit die in der Regel sehr dünne und damit wenig belastbare Decklage von Dach-, Wand- oder Bodenelementen der hier in Rede stehenden Art im Bereich der Durchgangsöffnung mit der über den angekoppelten Haken wirkenden Last nicht ausreißt oder in anderer Weise ungewollt verformt wird, ist an der Rückseite der Decklage in der Regel ein Verstärkungselement vorgesehen, an dem sich das jeweilige Koppelelement abstützt.

Über in der Decklage der Decken-, Wand- oder Bodenelemente eingeformten Durchgangsöffnungen erfolgt dabei die Befestigung von Bauelementen, wie Tragstützen, Ringen, Leisten, Konsolen und desgleichen, an denen die zu transportierende Ware angeschlagen oder an die die Ware gehängt wird. So werden beispielsweise Fleischportionen an Tragstangen hängend transportiert, die von in regelmäßigen Abständen am Dach eines Transportfahrzeugaufbaus angeordnete Konsolen getragen sind.

Bei den hier erwähnten Koppelelementen handelt es sich typischerweise um Befestigungsschrauben, die mit ihrem Gewindeschaft in die in diesem Fall als Gewindeöffnung ausgebildete Aufnahme des Verstärkungselements eingeschraubt werden.

Um eine noch großflächigere Verteilung der über den jeweiligen Haken eingetragenen Last zu ermöglichen, wird bei den bekannten Elementen der hier in Rede stehenden Art auf der Rückseite der Decklage auch ein Profilelement oder desgleichen angeordnet, das aufgrund seiner beispielsweise U-förmigen Formgebung eine optimale Steifigkeit besitzt und als solches hohe Lasten aufnehmen kann. Derartige Profile sind in der Regel dann vorgesehen, wenn an der Decklage des jeweiligen Decken-, Wand- oder Bodenelements mehrere in einer Reihe beabstandet zueinander angeordnete Öffnungen zum Ankoppeln eines Anschlagmittels vorgesehen sind. Das Profil erstreckt sich dann beispielsweise jeweils über eine Reihe dieser Öffnungen.

Die Decken-, Wand- oder Bodenelemente der hier in Rede stehenden Art umfassen neben der den Abschluss zum vom jeweiligen Element begrenzten Raum bildenden, beispielsweise aus Stahl oder einem Al-Werkstoff bestehenden Decklage üblicherweise weitere Lagen, darunter eine so genannte Isolierlage, die beispielsweise aus einem geschäumten, thermisch isolierenden Material besteht und an der vom betreffenden Raum abgewandten Rückseite der Decklage angeordnet ist. Auch die Decklage selbst kann in mehreren Schichten aufgebaut sein, um ihr die jeweils geforderten Eigenschaften, wie hohe Beulsteifigkeit, optimierte Dichtheit und desgleichen zu verleihen.

Ein Problem bei der Montage der bekannten Decken-, Wand- oder Bodenelemente ergibt sich daraus, dass das Verstärkungselement an der Rückseite der Decklage, also in der Regel im Inneren des jeweiligen Decken-, Wand- oder Bodenelements angeordnet ist. Aufgrund der unvermeidbaren Fertigungsungenauigkeiten sind hier besondere Maßnahmen erforderlich, um eine ordnungsgemäße Positionierung des Verstärkungselements in Bezug auf die jeweilige Durchgangsöffnung in der Decklage zu gewährleisten. Besonders erschwert wird dies dann, wenn, wie im Stand der Technik üblich, auf die Decklage eine Isolierlage aufgebracht werden soll. Die beim Anschäumen dieser Lage in Folge der Expansion des Isolierschaums entstehenden Kräfte sind erheblich, so dass sie ein im für die Isolierlage vorgesehenen Innenraum des jeweiligen Decken-, Wand- oder Bodenelements angeordnetes Verstärkungselement leicht verschieben können, wenn es nicht gesondert befestigt ist.

Vor dem Hintergrund des Standes der Technik hat sich die Aufgabe ergeben, ein Decken-, Wand- oder Bodenelement der voranstehend erläuterten Art zu schaffen, bei dem mit einfachen Mitteln eine exakte Positionierung des jeweils vorgesehenen Verstärkungselements während des Herstellungsprozesses und im Gebrauch gesichert ist.

Ebenso sollte eine vorteilhafte Verwendung von derartigen Decken-, Wand- oder Bodenelementen angegeben werden.

In Bezug auf das Decken-, Wand- oder Bodenelement hat die Erfindung diese Aufgabe dadurch gelöst, dass ein solches Element mindestens die in Anspruch 1 angegebenen Merkmale besitzt.

Vorteilhaft verwenden lassen sich erfindungsgemäße Decken-, Wand- oder Bodenelemente für den Bau von Kofferaufbauten für Transportfahrzeuge, in denen Ware hängend oder abgespannt transportiert wird.

Weitere vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Decken-, Wand- oder Bodenelement weist demnach eine aus einem Metallwerkstoff bestehende Decklage auf, die eine Außenseite und zur Außenseite gegenüberliegend angeordnete Rückseite besitzt. Dabei ist in die Decklage mindestens eine Durchgangsöffnung eingeformt und an der Rückseite der Decklage ein Verstärkungselement angeordnet, das eine, insbesondere konzentrisch zur Durchgangsöffnung der Decklage ausgerichtete, Ausnehmung aufweist, wobei das Verstärkungselement als Gegenlager für einen Lagerabschnitt eines Koppelglieds, wie eines Hakens oder desgleichen, vorgesehen ist, der mit seinem Lagerabschnitt in die Durchgangsöffnung und die Ausnehmung steckbar ist, um ihn an das Decken-, Wand- oder Bodenelement anzukoppeln.

Erfindungsgemäß ist nun der Rand der Durchgangsöffnung der Decklage mindestens abschnittsweise zu einem von der Rückseite der Decklage abstehenden, die Durchgangsöffnung mindestens abschnittsweise umgrenzenden Kragen gebogen, der formschlüssig mit einem an dem Verstärkungselement ausgebildeten Formelement zusammenwirkt, so dass das Verstärkungselement mit seiner Ausnehmung über das Zusammenwirken des Kragens und des Formelements in Bezug auf die Durchgangsöffnung zentrisch fluchtend ausgerichtet ist.

Die Erfindung greift hierbei auf Befestigungsmöglichkeiten zurück, wie sie aus der US 5,273,382 A und der US 4,295,765 A für aus Blechmaterial bestehende Seiten oder Bodenteile von Lastkraftwagen ihrer Funktion nach grundsätzlich bekannt sind.

Bei einem erfindungsgemäßen Wand-, Decken- oder Bodenelement ist somit im Bereich der jeweiligen Durchgangsöffnung eine Positionierhilfe in Form eines in den Raum vorstehenden Kragens ausgebildet, an dem das Verstärkungselement bei der Montage seinen Platz selbsttätig findet. Dazu sind der Kragen und das Verstärkungselement so ausgebildet, dass der Kragen mit einem entsprechend geformten Formelement des Verstärkungselements zusammenwirkt und zwar derart, dass das Formelement einerseits über den Kragen mit seiner Ausnehmung zentriert ist und andererseits gegen ein seitliches Verschieben entlang der Rückseite der jeweiligen Decklage gesichert ist.

Bei dem zu diesem Zweck vorgesehenen "Formelement" des Verstärkungselements kann es sich um einen Vorsprung handeln, dessen Form und Abmessung so ausgebildet sind, dass er formschlüssig in die vom Kragen umgrenzte Öffnung greifen kann. Hierzu kann der betreffende Vorsprung nach Art eines kegelförmig in Richtung seiner freien Stirnfläche zulaufenden Dorns oder Doms ausgebildet sein. In diesem Fall ist der Durchmesser des Vorsprungs im Bereich von dessen freier Stirnfläche zweckmäßiger kleiner als der Durchmesser der vom Kragen umgrenzten Öffnung, während er im Bereich seiner Anbindung an das Verstärkungselement größer ist, so dass der Vorsprung bei der Montage zwanglos seine in Bezug auf die Öffnung der Decklage optimal zentrierte Stellung findet, in der er im spielfreien Sitz mit seiner Umfangsfläche an dem Kragen anliegt.

Alternativ oder ergänzend kann als mit dem Kragen zusammenwirkendes "Formelement" am Verstärkungselement auch eine Einsenkung vorgesehen sein, in die der Kragen ragt und so das Verstärkungselement mindestens hinsichtlich seiner Bewegungen parallel zur durch die Decklage aufgespannten Ebene festlegt. Auch hier findet das Verstärkungselement bei der Montage selbsttägig seine optimal zentrisch in Bezug auf die vom Kragen umgrenzte Öffnung der Decklage.

Die Montage und ordnungsgemäße Positionierung des Verstärkungselements an der Rückseite der Decklage ist damit denkbar einfach. Ebenso kann durch das formschlüssige Ineinandergreifen des Kragens der Decklage und des mit ihm formschlüssig zusammenwirkenden Formelements die Fixierung des Verstärkungselements an der Decklage während der bei der weiteren Montage zu absolvierenden Arbeitsschritte unterstützt werden.

Der Kragen kann in an sich bekannter Weise durch eine so genannte "3D-Stanzung" geformt werden, bei der einerseits das die Durchgangsöffnung freigebende Material aus der Decklage geschnitten wird und andererseits in einem mit dem Schneidvorgang kombinierten Umformvorgang der Kragen geformt wird.

Grundsätzlich kann die Durchgangsöffnung jede Form besitzen, die für den jeweiligen Anwendungszweck passend ist. Die Form des Verstärkungselements ist dabei jeweils so an die Form der Durchgangsöffnung angepasst, dass das Verstärkungselement den die Durchgangsöffnung umgebenden Randbereich auf der Rückseite der Decklage abstützt und der jeweilige Kragen bzw. Kragenabschnitt mit dem zugeordneten Formelement "Vorsprung"/"Einsenkung" zusammenwirkt. Fertigungstechnisch besonders einfach herstellen lassen sich erfindungsgemäß mit einem Kragen umgrenzte Durchgangsöffnungen einer Decklage eines Decken-, Wand- oder Bodenelements dann, wenn die Durchgangsöffnung kreisrund ist.

Gleichzeitig ergibt sich eine besonders sichere und exakte Positionierung, wenn der Kragen vollständig um die Durchgangsöffnung umläuft. Indem zusätzlich auch das Formelement des Verstärkungselements so ausgebildet ist, dass es dem Verlauf des Kragens entsprechend die Öffnung des Verstärkungselements füllt oder umschließt, ist eine optimal lagesichere Befestigung des Verstärkungselements gewährleistet.

Die beispielsweise als mit dem Kragen zusammenwirkendes Formelement vorgesehene Einsenkung des Verstärkungselements kann nach Art einer Nut ausgebildet sein. In die Nut greift der Kragen, wenn das Verstärkungselement an der dafür vorgesehenen Stelle an der Rückseite der Decklage des Dach-, Wand- oder Bodenelements montiert wird. Dabei kann die Nut mit einem Dichtmittel gefüllt sein, in das der Kragen greift, so dass mit einfachen Mitteln ein flüssigkeitsdichter Anschluss des Verstärkungselements an die Decklage hergestellt werden kann.

Genauso ist es denkbar, dass das Verstärkungselement zusätzlich zu seiner Nut an seiner zur Anlage an der Rückseite der Decklage kommenden Stirnseite ein separates Dichtelement trägt, durch das die Kontaktfuge zwischen dem Verstärkungselement und der Rückseite abgedichtet ist.

Gemäß einer weiteren für die Praxis wichtigen Ausgestaltung der Erfindung ist an der Rückseite der Decklage ein sich über die Breite oder Länge der Decklage erstreckendes Profilelement angeordnet, das über die Durchgangsöffnung gelegt ist und im Bereich der Durchgangsöffnung einen Ausschnitt aufweist, wobei die Abmessungen des Ausschnitts so an die Abmessungen des Verstärkungselements angepasst sind, dass das Verstärkungselement mit dem Formelement in dem Ausschnitt sitzt und der Kragen mit dem Formelement zusammenwirkt. Profilträger der hier genannten Art sind in der Praxis als so genannte "Fleischhangträger" bekannt und werden beispielsweise in die Decke von Kofferaufbauten für den Transport von Kühlgut eingesetzt. Dabei sitzt das Profilelement auf der Rückseite der Decklage und verstärkt das Dach dort so, dass es zumindest im Bereich des Profils die in Folge der zu transportierenden Last auftretenden Belastungen sicher ertragen kann.

Um eine optimal lagerichtige Befestigung des Verstärkungselements in dem Profil sicher zu gewährleisten, kann hierbei das zum Zusammenwirken mit dem Kragen vorgesehene Formelement des Verstärkungselements an einem Vorsprung ausgebildet sein, mit dem das Verstärkungselement formschlüssig im zugeordneten Ausschnitt des Profilelements sitzt.

Dabei kann die Befestigung des Verstärkungselements an dem Profilelement auch so erfolgen, dass das Verstärkungselement gegen eine Verdrehung um eine durch das Zentrum der Durchgangsöffnung verlaufende und senkrecht auf der Decklage stehende Drehachse gesichert ist.

Das optional erfindungsgemäß vorgesehene Profilelement kann auch zur Halterung des Verstärkungselements an der Decklage genutzt werden. Dazu kann das Verstärkungselement mittels eines Fixierelements an dem Profilelement fixiert sein. Bei dem Fixierelement kann es sich beispielsweise um ein blattfederähnliches Element handeln, das zwischen zwei Abschnitten des Profilelements verspannt wird und dabei als Halterung für das Fixierelement dient. Mit einer solcherart ausgebildeten Klemmbefestigung lassen sich eine Vielzahl von Verstärkungselementen schnell am Profilelement eines erfindungsgemäßen Decken-, Wand- oder Bodenelements befestigen, um anschließend die Fertigmontage des betreffenden Elements vorzunehmen.

Als besonders praxisgerecht erweisen sich die Erfindung und ihre voranstehend dargelegten Ausgestaltungen, wenn bei einem Decken-, Wand- oder Bodenelement an die Rückseite der Decklage eine aus einem Schaum bestehende Isolierlage angeschäumt ist. Die erfindungsgemäße Ankopplung und formschlüssige Festlegung des Verstärkungselements erlaubt hier nicht nur eine exakte Positionierung, sondern auch eine einfache Sicherung des Verstärkungselements gegen ein Verschieben in Folge des Drucks, den der Isolierschaum unvermeidbar auf das Verstärkungselement ausübt. Insbesondere die voranstehend schon erläuterte Möglichkeit, das Verstärkungselement zusätzlich zu seiner erfindungsgemäß über den Kragen der Decklage erfolgenden Lagesicherung an einem zur Verstärkung der Decklage und des Paneels im Ganzen vorgesehenen Profilelement zu befestigen, ermöglicht eine besonders einfache Montage, weil hier keine gesonderten Maßnahmen ergriffen werden müssen, um die Position des Verstärkungselements in der geschäumten Isolierlage zu sichern und den Austritt von Schaummaterial zu verhindern.

Beispielsweise dann, wenn das Koppelglied als Schraube und die Ausnehmung des Verstärkungselements dementsprechend als Innengewindeöffnung ausgebildet sind, kann es zweckmäßig sein, die zum Ankoppeln des Koppelelements vorgesehene Ausnehmung des Verstärkungselements als Durchgangsöffnung auszubilden. In diesem Fall sollte die Ausnehmung des Verstärkungselements an ihrem von der Durchgangsöffnung abgewandten Ende mittels einer Abdeckung oder eines Stopfens verschlossen sein, um einerseits bei der Fertigung des Decken-, Wand- oder Bodenelements ein Austreten von Schaum oder einem anderen für eine Innenlage des jeweiligen Decken-, Wand- oder Bodenelements vorgesehenen Füllmaterial zu verhindern und um andererseits einem Eindringen von Feuchtigkeit über die Durchgangsöffnung der Decklage in das jeweilige Boden-, Decken- oder Wandelement hinein vorzubeugen. Am erfindungsgemäßen Decken-, Wand- oder Bodenelement können Geräte, wie Kühlaggregate, Rohre für die Verteilung von Kühlluft, oder Konsolen befestigt werden, die entweder selber als Anschläge für die Befestigung von Transportgut dienen oder beispielsweise Tragrohre oder desgleichen tragen, an denen das Transportgut angeschlagen wird. Ebenso können an der Außenhaut von Fahrzeugaufbauten, die aus erfindungsgemäßen Decken-, Wand- oder Bodenelementen gebildet sind, Anbauteile befestigt werden, bei denen die Befestigung jeweils über die erfindungsgemäß zentrierten und fixierten Verstärkungselemente erfolgt. Beispielsweise können Spoiler oder Beleuchtungsmittel etc. auf diese Weise sicher befestigt werden.

Nachfolgend wird die Erfindung anhand einer ein Ausführungsbeispiel darstellenden Zeichnung näher erläutert. Deren Figuren zeigen jeweils schematisch:
- Fig. 1: einen Ausschnitt eines Dachelements in einer perspektivischen Ansicht von unten;

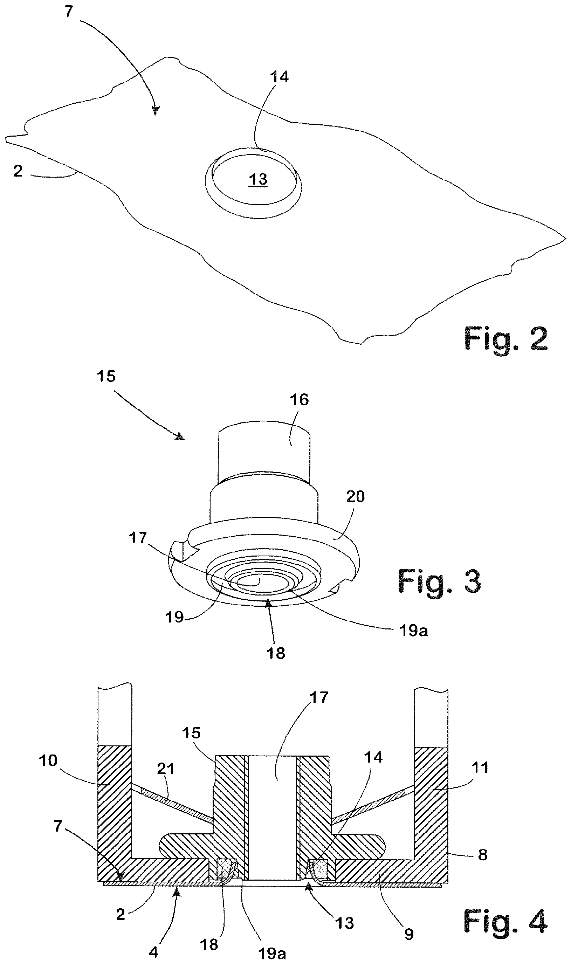

- Fig. 2: einen Ausschnitt einer Decklage des Dachelements gemäß Fig. 1 in einer perspektivischen Sicht auf die Rückseite der Decklage;
- Fig. 3: ein Verstärkungselement in einer perspektivischen Ansicht von unten;
- Fig. 4: das Verstärkungselement in einer an der Rückseite der Decklage montierten Stellung in einem senkrecht zur Rückseite der Decklage geführten Schnitt;

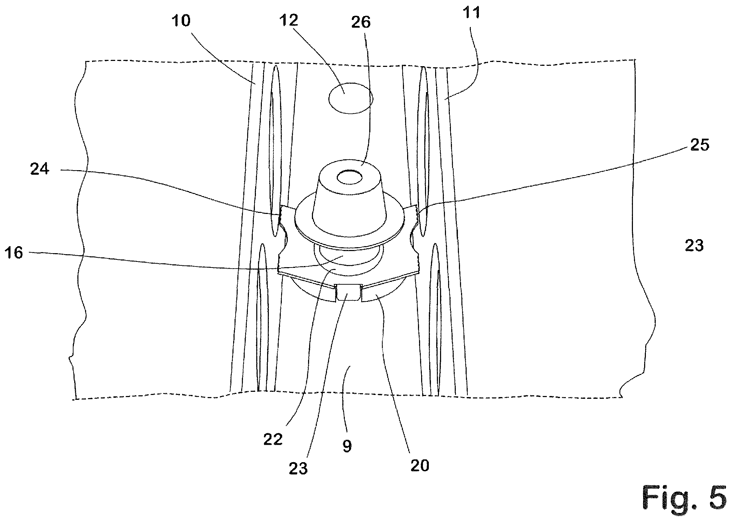

- Fig. 5: einen Ausschnitt der Decklage im für das Anschäumen einer Isolierlage vorbereiteten Zustand in einer perspektivischen Sicht auf die Rückseite der Decklage;
- Fig. 6: eine alternative Ausgestaltung eines Verstärkungselements in einer der Fig. 4 entsprechenden Schnittdarstellung;
- Fig. 7: eine alternative Ausgestaltung eines Verstärkungselements in einer der Fig. 4 entsprechenden Schnittdarstellung.
- Fig. 8: eine alternative Ausgestaltung eines Verstärkungselements in einer der Fig. 4 entsprechenden Schnittdarstellung.

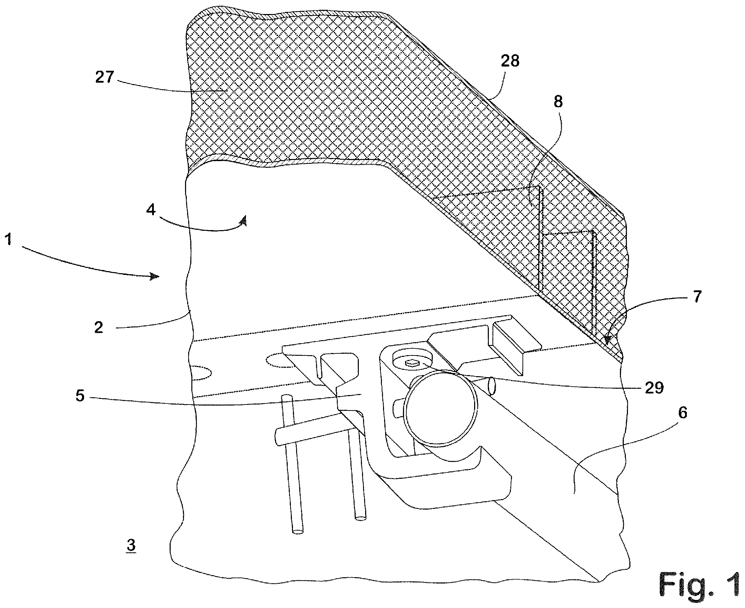

Das in Fig. 1 dargestellte Dachelement 1 ist Teil eines hier nicht weiter dargestellten Aufbaus für ein Transportfahrzeug, wie er beispielsweise in der EP 2 116 456 A1 im Detail beschrieben ist.

Das Dachelement 1 weist eine Decklage 2 auf, die beispielsweise in der Hauptsache aus einem Stahl- oder Aluminiumwerkstoff-Blech besteht, wobei die Decklage 2 in an sich bekannter Weise zusätzliche Funktionsschichten umfassen kann, um ihre optische Erscheinung, ihre Benetzungsfähigkeit, ihre Dampfdichtheit und desgleichen zu optimieren.

An der dem Laderaum 3 des Aufbaus zugeordneten Außenseite 4 der Decklage 2 sind in regelmäßigen Abständen über die Länge des Dachelements 1 verteilt Konsolen befestigt, von denen hier der Übersichtlichkeit halber nur eine einzige Konsole 5 gezeigt ist. Die Konsolen 5 tragen eine Tragstange 6 an die das jeweilige hier nicht gezeigte Transportgut mittels hier ebenfalls nicht gezeigter Haken gehängt werden kann.

An der vom Laderaum 3 abgewandten Rückseite 7 der Decklage 2 ist jeder der Konsolen 5 jeweils ein Profilelement 8 zugeordnet, das sich quer zur Längserstreckung der Tragstange 6 ausgerichtet in Breitenrichtung des Dachelements 1 erstreckt. Das beispielsweise aus Stahl- oder Al-Blechmaterial geformte und mit der Rückseite 7 der Decklage 2 verklebte Profilelement 8 weist einen U-förmigen Querschnitt mit einer auf der Rückseite 7 der Decklage 2 liegenden Basis 9 und zwei seitlich daran anschließende und von der Rückseite 7 der Decklage 2 in das Dachelement 1 hinein gerichtete Schenkel 10,11 auf. Dabei sind in die Basis 9 des Profilelements 8 in regelmäßigen Abständen angeordnete kreisförmige Ausschnitte 12 eingeformt.

In bestimmten Bereichen der Ausschnitte 12 der Basis 9 des Profilelements 8 sitzt eine Durchgangsöffnung 13 der Decklage 2. Die Durchgangsöffnungen 13 der Decklage 2 sind dabei ebenfalls kreisrund ausgebildet und vollständig von einem Kragen 14 umgrenzt, der ebenfalls an der Rückseite 7 der Decklage 2 in das Dachelement 1 hineinweisend geformt ist. Der Kragen 14 ist in einer im Zuge des Einstanzens der Durchgangsöffnungen 13 in die Decklage 2 durchgeführten Umformoperation gebildet worden.

Jeder Durchgangsöffnung 13 der Decklage 2 ist ein Verstärkungselement 15 zugordnet. Die aus Stahl gefertigten Verstärkungselemente 15 sind nach Art einer Gewindehülse ausgebildet und weisen einen zentralen Hülsenabschnitt 16 mit einer als durchgehende an beiden Stirnseiten des Hülsenabschnitts 16 offene Innengewindeöffnung ausgebildeten Ausnehmung 17 auf. In die eine Stirnseite 18 des Verstärkungselements 15 ist eine umlaufende, in Draufsicht kreisförmige Nut 19 eingeformt, die mit einem flexiblen Dichtmaterial gefüllt ist. Die Nut 19 umgibt dabei einen in Bezug auf sie zentrisch angeordneten Dornvorsprung 19a, in der Fachsprache auch "Dom" genannt, durch den ebenso zentralangeordnet die Ausnehmung 17 verläuft. Der Dornvorsprung 19a ist im Bereich des Übergangs zwischen seiner freien Stirnseite, an der die Ausnehmung 17 mündet, und seiner die Nut 19 begrenzenden Umfangsfläche umlaufend angephast.

In einem weniger als die Materialstärke der Basis 9 des Profilelements 8 entsprechenden Abstand von der Stirnseite 18 ist an dem Hülsenabschnitt 16 ein umlaufender Stützabsatz 20 ausgebildet.

Der Durchmesser der Ausschnitte 12 der Basis 9 des Profilelements 8 ist so an den Außendurchmesser des Hülsenabschnitts 16 und damit einhergehend an den Außendurchmesser des Kragens 14 der Durchgangsöffnungen 13 angepasst, dass der Hülsenabschnitt 16 mit seinem zwischen der Stirnseite 18 und dem Stützabsatz 20 vorhandenen Bereich mit Spiel in den ihm jeweils zugeordneten Ausschnitten 12 des Profilelements 8 sitzt. Dagegen ist der Außendurchmesser des Stützabsatzes 20 wesentlich größer als der Durchmesser der Ausschnitte 12, so dass das Verstärkungselement 15 im auf die Basis 9 des Profilelements 8 aufgesetzten Zustand auf dem die betreffenden Ausschnitte 12 umgrenzenden Randbereich der Basis 9 abgestützt ist.

Gleichzeitig sind der Durchmesser der Nut 19 und der Außendurchmesser des Dornvorsprungs 19a so bemessen, dass bei mit der Stirnseite 18 auf die Rückseite 7 der Decklage 2 aufgesetztem Verstärkungselement 15 der Kragen 14 der jeweiligen Durchgangsöffnung 13 in die Nut 19 und das darin enthaltene Dichtmaterial greift, so dass das Verstärkungselement 15 in jeder parallel zur Rückseite 7 der Decklage 2 ausgerichteten Richtung formschlüssig fixiert ist. Gleichzeitig ist der Außendurchmesser des Dornvorsprungs 19a so bemessen, dass der Vorsprung 19a bei fertig montiertem Verstärkungselement 15 mit geringem Spiel ebenfalls formschlüssig in der vom Kragen 14 umgrenzten Öffnung 13 sitzt. Beim Aufsetzen des Verstärkungselements 15 auf den Kragen 14 zentriert sich das Verstärkungselement 15 über den Vorsprung 19a selbsttätig so in der vom Kragen 14 umgebenen Öffnung 13 , dass das Verstärkungselement mit seiner Ausnehmung 17 optimal zentriert in der Öffnung 13 sitzt und die Längsachse der Ausnehmung 17 durch das Zentrum der Öffnung 13 verläuft.

Um das Verstärkungselement 15 an der Rückseite 7 der Decklage 2 zu fixieren, ist eine aus einem in Draufsicht rechteckigen Stahlblechzuschnitt geformte Klemmfeder 21 vorgesehen. Diese weist eine Öffnung 22 auf, durch die der frei von der Basis 9 abstehende Bereich des Hülsenabschnitts 16 des Verstärkungselements 15 mit Spiel geführt wird. Zusätzlich weist die Klemmfeder 21 an ihren Längsseiten jeweils einen in Richtung des Stützabsatzes 20 gebogenen Halteabschnitt 23 auf, der den Stützabsatz 20 des Verstärkungselements 15 jeweils seitlich und von seiner der Stirnseite 18 zugeordneten Seite her umgreift, so dass die Klemmfeder 21 formschlüssig mit dem Verstärkungselement 15 verkoppelt ist. In den Eckbereichen der Schmalseiten des Klemmfeder 21 sind Rastvorsprünge 24,25 ausgeformt.

Die Länge der Klemmfeder 21 ist um ein bestimmtes Übermaß größer als die lichte Weite zwischen den Schenkeln 10,11, so dass sich die Klemmfeder 21, wenn das mit ihr versehene Verstärkungselement 15 an dem für ihn vorgesehenen Platz an der Basis 9 des Profilelements 8 positioniert wird, federnd elastisch verformt wird und sich die Rastvorsprünge 24,25 form- und kraftschlüssig mit den einander zugewandten Flächen der Schenkel 10,11 verkrallen und das Verstärkungselement 15 fest und verdrehsicher an dem Profilelement 8 gehalten ist.

Dabei stellt der formschlüssig in die Nut 19 greifende Kragen 14 der Decklage 2 sicher, dass das Verstärkungselement 15 bei seiner Platzierung an der Basis 9 des Profilelements 8 selbsttätig seine ordnungsgemäße Position findet. Das in der Nut 19 vorhandene Dichtmaterial dichtet dabei die Fügezone zwischen der Decklage 2 und dem Verstärkungselement 15 ab.

Auf dem frei von der Basis 9 abstehenden Ende des Hülsenabschnitts 16 des Verstärkungselements 15 sitzt eine Schutzkappe 26, die die Ausnehmung 17 an diesem Ende abdichtet.

An die mit dem Profilelement 8 und den daran fixierten Verstärkungselementen 15 versehene Rückseite 7 der Decklage 2 ist eine Isolierlage 27 angeschäumt, die aus einem stark wärmeisolierenden Schaum besteht. Im Anschäumprozess stellen die durch das Dichtmaterial in der Nut 19 bewerkstelligte Abdichtung und die Schutzkappe 26 sicher, dass kein Schaumaterial in die Ausnehmung 17 des Verstärkungselements 15 gelangt. Gleichzeitig sichert die Klemmfeder 21 das Verstärkungselement 15 gegen ein Verschieben in Folge des von dem angeschäumten Schaum erzeugten Drucks.

Schließlich liegt auf der von der Decklage 2 abgewandten Seite der Isolierlage 27 eine Außenlage 28 auf, die den Abschluss des Dachelements 1 zur Außenseite des Aufbaus bildet.

Zum Befestigen wird die Konsole 5 mit ihrer an ihrem Befestigungsabschnitt ausgebildeten Anlagefläche an die Außenseite 4 des Dachelements 1 angesetzt und eine in der Anlagefläche mündende Durchgangsöffnung zur Deckung mit der dazu vorgesehenen Durchgangsöffnung 13 der Decklage 2 gebracht. Anschließend wird eine Schraube 29 durch die Durchgangsöffnung der Konsole 5 und die Durchgangsöffnung 13 der Decklage 2 in das Innengewinde der Ausnehmung 17 geschraubt, bis die Konsole 5 ausreichend fest an dem Dachelement 1 fixiert ist.

Die Klemmfeder 21 sichert dabei das Verstärkungselement 15 gegen ein Verdrehen um die Drehachse der Schraube 29. Gleichzeitig sichern die formschlüssig zusammenwirkenden Kragen 14 und Nut 19 das Verstärkungselement 15 gegen ein seitliches Verschieben, so dass die Befestigung der Konsole 5 schnell und sicher erledigt werden kann.

Anschließend kann die Tragstange 6 in die Konsole 5 eingehängt und dort in an sich bekannter Weise lösbar fixiert werden.

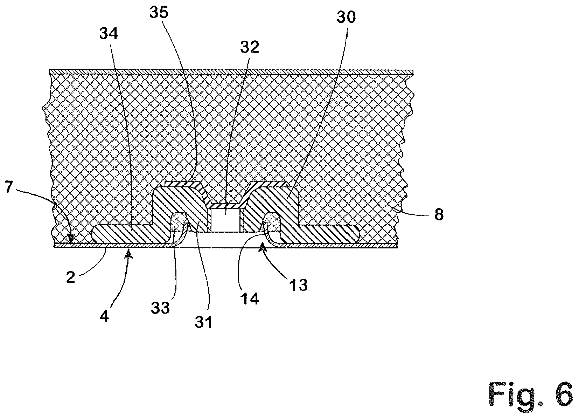

Das in Fig. 6 gezeigte Verstärkungselement 30 ist beispielsweise aus einem Blechzuschnitt geformt und weist einen zentralen Vorsprung 31 mit einer Gewindeöffnung 32 sowie eine um den Vorsprung 31 umlaufende Nut 33 auf, die an ihrem Außenumfang von einer umlaufenden Krempe 34 begrenzt ist. Die Krempe 34 liegt flach an der Rückseite 7 der Decklage 2 an. Dabei ist der Vorsprung 31 an seiner der Nut 33 zugeordneten Umfangsfläche konisch in Richtung der freien Stirnfläche des Vorsprungs 31 zulaufend ausgebildet. Im Bereich seiner freien Stirnfläche ist der Durchmesser des Vorsprungs 31 kleiner als der kleinste Durchmesser der vom Kragen 14 umgrenzten Öffnung 13, wogegen der Durchmesser im Fußbereich des Vorsprungs 31 größer ist als der kleinste Durchmesser der Öffnung 13. Gleichzeitig ist die Höhe des Vorsprungs 31 kleiner als die Höhe der der Krempe 34 zugeordneten Umfangswand der Nut 33.

Auch hier erfolgt die Zentrierung des Verstärkungselements 30 somit dadurch, dass die Form und die Geometrie des Vorsprungs 31 derart an die Geometrie und Form der vom Kragen 14 umgrenzten Öffnung 13 angepasst ist, dass der Vorsprung 31 sich und damit auch das Verstärkungselement 30 beim Aufsetzen auf den Kragen 14 selbst in Bezug auf die Öffnung 13 zentriert.

Um ein Eindringen von Schaum in die Gewindeöffnung 32 beim Anschäumen der Isolierlage 8 zu verhindern, liegt auf der der Isolierlage 8 zugewandten Seite des Verstärkungselements 30 eine Abdeckkappe 35.

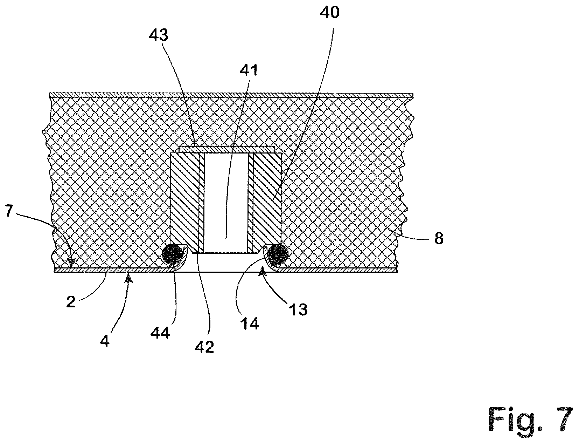

Das in Fig. 7 gezeigte Verstärkungselement 40 ist nach Art einer zylindrischen Gewindehülse geformt und weist neben einer koaxial zur Längsachse des Verstärkungselements 40 ausgerichteten Gewindeöffnung 41 einen kegelstumpfförmigen Vorsprung 42 auf, der zentral auf der einen Stirnseite des Verstärkungselemente 40 sitzt und an dessen freier Stirnseite die Gewindeöffnung 41 mündet. Im Bereich seiner freien Stirnfläche ist der Durchmesser des Vorsprungs 42 kleiner als der kleinste Durchmesser der vom Kragen 14 umgrenzten Öffnung 13, wogegen der Durchmesser im Fußbereich des Vorsprungs 42 größer ist als der kleinste Durchmesser der Öffnung 13. Gleichzeitig ist die Höhe des Vorsprungs 42 kleiner als die Höhe des Kragens 14 über der Rückseite 7 des Decklage 2.

Auch hier dient somit der Vorsprung 42 wie der Vorsprung 31 beim Verstärkungselement 30 oder der Vorsprung 19a beim Verstärkungselement 15 als Formelement für die Zentrierung des Verstärkungselements 40, welche wiederum dadurch erfolgt, dass die Form und die Geometrie des Vorsprungs 42 derart an die Geometrie und Form der vom Kragen 14 umgrenzten Öffnung 13 angepasst ist, dass der Vorsprung 42 sich und damit auch das Verstärkungselement 40 beim Aufsetzen auf den Kragen 14 selbst in Bezug auf die Öffnung 13 zentriert.

Um ein Eindringen von Schaum in die Gewindeöffnung 41 beim Anschäumen der Isolierlage 8 zu verhindern, liegt auf der der Isolierlage 8 zugewandten Stirnseite des Verstärkungselements 40 eine Abdeckplatte 43.

Eine um den Außenumfang des Kragens 14 gelegte O-Ringdichtung 44 stellt sicher, dass der Schaum der Isolierlage 8 nicht in die Öffnung 13 gelangt.

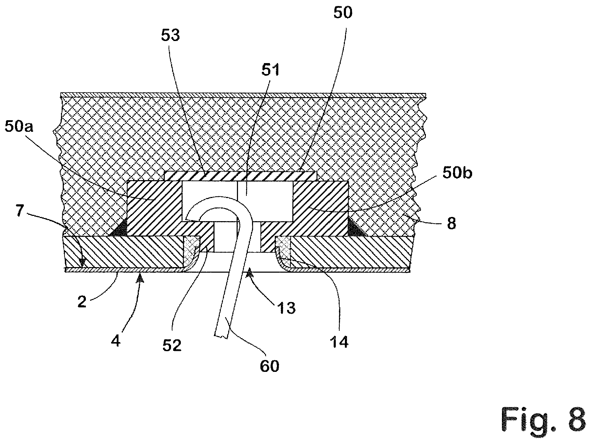

Das in Fig. 8 gezeigte Verstärkungselement 50 ist aus zwei identischen halbschalenförmigen Hälften 50a,50b zusammengesetzt. In die einander zugeordneten Stirnseiten der Hälften 50a,50b ist jeweils halbschalenförmig eine Einsenkung eingeformt, so dass dann, wenn die Hälften 50a,50b mit ihren einander zugeordneten Stirnseiten aneinander liegen, eine Ausnehmung 51 des Verstärkungselements 50 mit einem umlaufenden Absatz gebildet ist, an den ein Haken 60 mit seinem Hakenabschnitt angekoppelt werden kann.

Die Hälften 50a,50b weisen in Verlängerung ihrer einander zugeordneten Stirnseiten jeweils einen in Richtung der jeweiligen Öffnung 13 vorstehenden bogenförmigen Vorsprung auf, so dass auch hier dann, wenn die Hälften 50a,50b zusammengesetzt sind, ein zylindrischer Vorsprung 52 gebildet ist.

Die Hälften 50a,50b sind dabei so auf die Basis 9 des Profilelements 8 aufgesetzt, dass sie mit dem durch sie gebildeten Vorsprung 52 durch den zugeordneten Ausschnitt 12 des Profilelements in die dort vorhandene Öffnung 13 der Decklage 2 greifen. Um die Hälften 50a,50b auf der Basis 9 zu fixieren, sind sie dort verklebt oder verschweißt. Der Durchmesser des Außenumfangs des Vorsprungs 52 entspricht dem kleinsten Innendurchmesser der vom Kragen 14 umgrenzten Öffnung 13, so dass der Vorsprung 52 mit seinem Außenumfang spielfrei am Innenrand des Kragens 14 anliegt. Um das Eintreten von Schaum der Isolierlage 8 in die Öffnung 13 zu verhindern, ist der zwischen dem Vorsprung 52, dem Kragen und der Innenumfangsfläche des Ausschnitts 12 verbleibende Raum mit einer Dichtmasse gefüllt.

Auch hier dient somit der Vorsprung 52 als Formelement für die Zentrierung des Verstärkungselements 50, welche hier dadurch erfolgt, dass die Form und die Geometrie des Vorsprungs 52 derart an die Geometrie und Form der vom Kragen 14 umgrenzten Öffnung 13 angepasst ist, dass der aus den Hälften 50a,50b mit dem Verstärkungselement 50 gebildete Vorsprung 52 sich und damit auch das Verstärkungselement 50 beim Einsetzen in den Kragen 14 in Bezug auf die Öffnung 13 zentriert.

Um ein Eindringen von Schaum in die Gewindeöffnung 51 beim Anschäumen der Isolierlage 8 zu verhindern, liegt auf der der Isolierlage 8 zugewandten Stirnseite des Verstärkungselements 50 eine Abdeckkappe 53.

Es versteht sich von selbst, dass die hier jeweils für eine Montage des jeweiligen Verstärkungselements 15, 30,40,50 an der unteren Decklage 2 erläuterten Ausführungen und Details in gleicher Weise gelten, wenn solche Verstärkungselemente 15,30,40,50 an der oberen Decklage 9 an einer der Öffnung 13 entsprechenden Öffnung mit einem entsprechend dem Kragen 14 in Richtung der Isolierlage 8 gerichteten Kragen montiert werden sollen.

### BEZUGSZEICHEN

- 1: Dachelement
- 2: Decklage
- 3: Laderaum
- 4: Außenseite der Decklage 2
- 5: Konsole (Bauteil)
- 6: Tragstange
- 7: Rückseite der Decklage 2
- 8: Profilelement
- 9: Basis des Profilelements 8
- 10,11: Schenkel des Profilelements 8
- 12: Ausschnitte in der Basis des Profilelements 8
- 13: Durchgangsöffnungen der Decklage 2
- 14: Kragen der Durchgangsöffnungen 13
- 15: Verstärkungselement
- 16: Hülsenabschnitt
- 17: Ausnehmung (Innengewindeöffnung) des Verstärkungselements 15
- 18: der Decklage 2 zugeordnete Stirnseite des Verstärkungselements 15
- 19: umlaufende, mit einem flexiblen Dichtmaterial gefüllte Nut (Formelement zum Zusammenwirken mit dem Kragen 14)
- 19a: Dorn (Formelement zum Zusammenwirken mit dem Kragen 14)
- 20: Stützabsatz des Verstärkungselements 15
- 21: Klemmfeder (Fixierelement)
- 22: Öffnung der Klemmfeder 21
- 23: Halteabschnitte der Klemmfeder 21
- 24,25: Rastvorsprünge der Klemmfeder 21
- 26: Schutzkappe (Abdeckung)
- 27: Isolierlage
- 28: Außenlage des Dachelements 1
- 29: Schraube (Koppelelement)
- 30: Verstärkungselement
- 31: Vorsprung (Formelement des Verstärkungselements 30)
- 32: Gewindeöffnung
- 33: Nut (Formelement des Verstärkungselements 30)
- 34: Krempe
- 35: Abdeckkappe
- 40: Verstärkungselement
- 41: Gewindeöffnung
- 42: Vorsprung (Formelement)
- 43: Abdeckplatte
- 44: O-Ringdichtung
- 50: Verstärkungselement
- 51 a: Hälfte des Verstärkungselements 50
- 51 b: Hälfte des Verstärkungselements 50
- 52: zylindrischer Vorsprung (Formelement)
- 53: Abdeckkappe
- 60: Haken

## Patentansprüche

1. Decken-, Wand- oder Bodenelement mit einer aus einem Metallwerkstoff bestehenden Decklage (2), die eine Außenseite (4) und gegenüberliegend zur Außenseite (4) eine Rückseite (7) besitzt, und mit einer an die Rückseite (7) der Decklage (2) angeschäumten, aus einem Schaum bestehenden Isolierlage (27), wobei in die Decklage (2) mindestens eine Durchgangsöffnung (13) eingeformt und an der Rückseite (7) der Decklage (2) ein Verstärkungselement (15) angeordnet ist, das eine Ausnehmung (17) aufweist, wobei das Verstärkungselement (15) als Gegenlager für ein Koppelelement (29) vorgesehen ist, das durch die Durchgangsöffnung (13) in die Ausnehmung (17) einführbar ist, um ein Bauteil (5) oder ein Transportgut an das Decken-, Wand- oder Bodenelement (1) anzukoppeln, **dadurch gekennzeichnet, dass** der Rand der Durchgangsöffnung (13) mindestens abschnittsweise zu einem von der Rückseite (7) der Decklage (2) abstehenden, die Durchgangsöffnung (13) mindestens abschnittsweise umgrenzenden Kragen (14) gebogen ist, der formschlüssig mit einem an dem Verstärkungselement (15) ausgebildeten Formelement (19,19a,31,33,42,52) zusammenwirkt, so dass das Verstärkungselement (15) mit seiner Ausnehmung (17) über das Zusammenwirken des Kragens (14) und des Formelements (19,19a,31,33,42,52) in Bezug auf die Durchgangsöffnung (13) zentrisch fluchtend ausgerichtet ist.

2. Decken-, Wand- oder Bodenelement nach Anspruch 1, **dadurch gekennzeichnet, dass** der Kragen (14)vollständig um die Durchgangsöffnung (13) umläuft.

3. Decken-, Wand- oder Bodenelement nach einem der voranstehenden Ansprüche, **dadurch gekennzeichnet, dass** das zum Zusammenwirken mit dem Kragen (14) vorgesehene Formelement des Verstärkungselements (15) nach Art einer Einsenkung (19) ausgebildet ist.

4. Decken-, Wand- oder Bodenelement nach einem der voranstehenden Ansprüche, **dadurch gekennzeichnet, dass** das zum Zusammenwirken mit dem Kragen (14) vorgesehene Formelement des Verstärkungselements (15) nach Art eines Vorsprungs (19a,31,42,52) ausgebildet ist.

5. Decken-, Wand- oder Bodenelement nach Anspruch 4, **dadurch gekennzeichnet, dass** der Vorsprung (19a,31,42) mindestens im Bereich seiner freien Stirnseite konisch zulaufend ausgebildet ist.

6. Decken-, Wand- oder Bodenelement nach Anspruch 3 und einem der Ansprüche 4oder 5,**dadurch gekennzeichnet, dass** der Vorsprung (19a,31) von der Einsenkung (19,33) mindestens abschnittsweise umgeben ist.

7. Decken-, Wand- oder Bodenelement nach einem der voranstehenden Ansprüche, **dadurch gekennzeichnet, dass** an der Rückseite (7) der Decklage (2) ein sich über die Breite oder Länge der Decklage (2) erstreckendes Profilelement (8) angeordnet ist, das über die Durchgangsöffnung (13) gelegt ist und im Bereich der Durchgangsöffnung (13) einen Ausschnitt (12) aufweist, wobei die Abmessungen des Ausschnitts (12) so an die Abmessungen des Verstärkungselements (15) angepasst sind, dass das Verstärkungselement (15) mit seinem mit der Einsenkung (19,33) versehenen Abschnitt in dem Ausschnitt (12) sitzt und der Kragen (14) in die Einsenkung (19,33) greift.

8. Decken-, Wand- oder Bodenelement nach Anspruch 7, **dadurch gekennzeichnet, dass** das zum Zusammenwirken mit dem Kragen (14) vorgesehene Formelement (19,19a,42,52) an einem Vorsprung des Verstärkungselements (15) ausgebildet ist, mit dem das Verstärkungselement (15) formschlüssig im zugeordneten Ausschnitt (12) des Profilelements (8) sitzt.

9. Decken-, Wand- oder Bodenelement nach einem der Ansprüche 7 oder 8, **dadurch gekennzeichnet, dass** das Verstärkungselement (15) mittels eines Fixierelements (21) an dem Profilelement (8) fixiert ist.

10. Decken-, Wand- oder Bodenelement nach einem der voranstehenden Ansprüche, **dadurch gekennzeichnet, dass** das Verstärkungselement (15) an seiner zur Anlage an der Rückseite (7) der Decklage (2) kommenden Stirnseite (18) ein Dichtelement trägt, durch das die Kontaktfuge zwischen dem Verstärkungselement (15) und der Rückseite (7) der Decklage (2) abgedichtet ist.

11. Decken-, Wand- oder Bodenelement nach einem der voranstehenden Ansprüche, **dadurch gekennzeichnet, dass** die Ausnehmung (17) des Verstärkungselements als Durchgangsöffnung ausgebildet ist.

12. Decken-, Wand- oder Bodenelement nach Anspruch 11 **dadurch gekennzeichnet, dass** die Ausnehmung (17)des Verstärkungselements (15) an ihrem von der Durchgangsöffnung (13) abgewandten Ende mittels einer Abdeckung (26) oder eines Stopfens verschlossen ist.

13. Verwendung eines gemäß einem der voranstehenden Ansprüche ausgebildeten Decken-, Wand- oder Bodenelements (1) für einen Kofferaufbau eines Transportfahrzeugs, in dem Ware an dem jeweiligen Decken-, Wand- oder Bodenelement (1) hängend oder abgespannt transportiert wird.

## Claims

1. Ceiling, wall or floor element having a cover layer (2) which consists of a metal material and has an outer side (4) and a rear side (7) opposite the outer side (4), and having an insulating layer (27) which is foamed onto the rear side (7) of the cover layer (2) and consists of a foam, wherein at least one through-opening (13) is moulded into the cover layer (2) and a reinforcing element (15) is arranged on the rear side (7) of the cover layer (2), which reinforcing element has a recess (17), wherein the reinforcing element (15) is provided as a counter-bearing for a coupling element (29) which can be inserted through the through-opening (13) into the recess (17) in order to couple a component (5) or a transported item to the ceiling, wall or floor element (1), **characterised in that** the edge of the through-opening (13) is bent at least in sections to form a collar (14) which projects from the rear side (7) of the cover layer (2), delimits the through-opening (13) at least in sections and is positively connected to a form element (19, 19a, 31, 33, 42, 52) formed on the reinforcing element (15), so that the reinforcing element (15) with its recess (17) is aligned centrally and flush with respect to the through-opening (13) due to the cooperation of the collar (14) and the form element (19, 19a, 31, 33, 42, 52).

2. Ceiling, wall or floor element according to claim 1, **characterised in that** the collar (14) completely surrounds the through-opening (13).

3. Ceiling, wall or floor element according to any of the preceding claims, **characterised in that** the form element of the reinforcing element (15) provided for cooperation with the collar (14) is designed in the manner of a depression (19).

4. Ceiling, wall or floor element according to any of the preceding claims, **characterised in that** the form element of the reinforcing element (15) provided for cooperation with the collar (14) is designed in the manner of a projection (19a, 31, 42, 52).

5. Ceiling, wall or floor element according to claim 4, **characterised in that** the projection (19a, 31, 42) is conically tapered at least in the region of its free end face.

6. Ceiling, wall or floor element according to claim 3 and any of claims 4 or 5, **characterised in that** the projection (19a, 31) is surrounded at least in sections by the depression (19,33).

7. Ceiling, wall or floor element according to any of the preceding claims, **characterised in that** a profile element (8) extending over the width or length of the cover layer (2) is arranged on the rear side (7) of the cover layer (2), which profile element is laid over the through-opening (13) and has a cut-out (12) in the region of the through-opening (13), wherein the dimensions of the cut-out (12) are adapted to the dimensions of the reinforcing element (15) such that the reinforcing element (15) is seated with its section provided with the depression (19, 33) in the cut-out (12) and the collar (14) engages in the depression (19, 33).

8. Ceiling, wall or floor element according to claim 7, **characterised in that** the form element (19, 19a, 42, 52) provided for cooperation with the collar (14) is formed on a projection of the reinforcing element (15) with which the reinforcing element (15) is positively seated in the associated cut-out (12) of the profile element (8).

9. Ceiling, wall or floor element according to any of claims 7 or 8, **characterised in that** the reinforcing element (15) is fixed to the profile element (8) by means of a fixing element (21).

10. Ceiling, wall or floor element according to any of the preceding claims, **characterised in that** the reinforcing element (15) bears, on its end face (18) which comes into contact with the rear side (7) of the cover layer (2), a sealing element by which the contact joint between the reinforcing element (15) and the rear side (7) of the cover layer (2) is sealed.

11. Ceiling, wall or floor element according to any of the preceding claims, **characterised in that** the recess (17) of the reinforcing element is designed as a through-opening.

12. Ceiling, wall or floor element according to claim 11, **characterised in that** the recess (17) of the reinforcing element (15) is closed at its end which faces away from the through-opening (13) by means of a cover (26) or a stopper.

13. Use of a ceiling, wall or floor element (1) designed according to any of the preceding claims for a box body of a transport vehicle in which goods are transported hanging or tensioned on the respective ceiling, wall or floor element (1).

## Revendications

1. Élément de sol, de toit ou de paroi avec une couche de revêtement (2) se composant d'un matériau métallique qui possède une face extérieure (4) et une face arrière (7) opposée à ladite face extérieure (4), et avec une couche isolante (27) expansée se composant d'une mousse sur la face arrière (7) de la couche de revêtement (2), au moins une ouverture de passage (13) étant moulée dans la couche de revêtement (2) et un élément de renforcement (15) étant agencé sur la face arrière (7) de la couche de revêtement (2) qui présente un évidement (17), l'élément de renforcement (15) étant prévu en tant que contre-palier pour un élément de couplage (29) qui est susceptible d'être introduit à travers l'ouverture de passage (13) dans l'évidement (17) afin de coupler un composant (5) ou une marchandise transportée à l'élément de sol, de toit ou de paroi (1), **caractérisé en ce que** le bord de l'ouverture de passage (13) est courbé, au moins par endroit, en un collet (14) dépassant depuis la face arrière (7) de la couche de revêtement (2) et qui circonscrit, au moins par endroits, l'ouverture de passage (13), ce collet (14) interagissant par liaison de forme avec un élément de formage (19, 19a, 31, 33, 42, 52) conçu sur l'élément de renforcement (15), de sorte que l'élément de renforcement (15) avec son évidement (17) est orienté centré en étant aligné sur l'interaction du collet (14) et de l'élément de formage (19, 19a, 31, 33, 42, 52) en ce qui concerne l'ouverture de passage (13).

2. Élément de sol, de toit ou de paroi selon la revendication 1, **caractérisé en ce que** le collet (14) s'enroule intégralement autour de l'ouverture de passage (13).

3. Élément de sol, de toit ou de paroi selon l'une des revendications précédentes, **caractérisé en ce que** l'élément de formage de l'élément de renforcement (15) prévu pour l'interaction avec le collet (14) est conçu à la manière d'un enfoncement (19).

4. Élément de sol, de toit ou de paroi selon l'une des revendications précédentes, **caractérisé en ce que** l'élément de formage de l'élément de renforcement (15) prévu pour l'interaction avec le collet (14) est conçu à la manière d'une saillie (19a, 31, 42, 52).

5. Élément de sol, de toit ou de paroi selon la revendication 4, **caractérisé en ce que** la saillie (19a, 31, 42) est conçue conique au moins dans la zone de sa face frontale libre.

6. Élément de sol, de toit ou de paroi selon la revendication 3 et l'une des revendications 4 ou 5, **caractérisé en ce que** la saillie (19a, 31) est entourée, au moins par endroits, par l'enfoncement (19, 33).

7. Élément de sol, de toit ou de paroi selon l'une des revendications précédentes, **caractérisé en ce qu'**un élément profilé (8) s'étendant sur la largeur ou la longueur de la couche de revêtement (2) est agencé sur la face arrière (7) de la couche de revêtement (2), cet élément profilé (7) étant placé au-dessus de l'ouverture de passage (13) et qui présente, dans la zone de l'ouverture de passage (13), une découpe (12), les dimensions de la découpe (12) étant adaptées aux dimensions de l'élément de renforcement (15) de telle sorte que l'élément de renforcement (15) avec sa découpe pourvue de l'enfoncement (19, 33) loge dans la découpe (12) et le collet (14) entre en prise dans l'enfoncement (19, 33).

8. Élément de sol, de toit ou de paroi selon la revendication 7, **caractérisé en ce que** l'élément de formage (19, 19a, 42, 52), prévu pour l'interaction avec le collet (14), est conçu sur une saillie de l'élément de renforcement (15), avec lequel l'élément de renforcement (15) loge, par liaison de forme, dans la découpe (12) associée de l'élément profilé (8).

9. Élément de sol, de toit ou de paroi selon l'une des revendications précédentes 7 ou 8, **caractérisé en ce que** l'élément de renforcement (15) est fixé au moyen d'un élément de fixation (21) sur l'élément profilé (8).

10. Élément de sol, de toit ou de paroi selon l'une des revendications précédentes, **caractérisé en ce que** l'élément de renforcement (15) porte, sur sa face frontale (18) venant en appui sur la face arrière (7) de la couche de revêtement (2), un élément d'étanchéité garantissant l'étanchéité de la jointure de contact entre l'élément de renforcement (15) et la face arrière (7) de la couche de revêtement (2).

11. Élément de sol, de toit ou de paroi selon l'une des revendications précédentes, **caractérisé en ce que** l'évidement (17) de l'élément de renforcement est conçu en tant qu'ouverture de passage.

12. Élément de sol, de toit ou de paroi selon la revendication 11, **caractérisé en ce que** l'évidement (17) de l'élément de renforcement (15) est fermé, sur son extrémité opposée à l'ouverture de passage (13), au moyen d'un couvercle (26) ou d'un bouchon.

13. Utilisation d'un élément de sol, de toit ou de paroi (1) conçu selon l'une des revendications précédentes pour un compartiment de changement d'un véhicule de transport dans lequel la marchandise est transportée suspendue ou ancrée sur l'élément de sol, de toit ou de paroi (1) respectif.
